(19) Europäisches Patentamt

European Patent Office

Office européen des brevets

(11) **EP 4 319 274 B1**

(12) **EUROPEAN PATENT SPECIFICATION**

(45) Date of publication and mention of the grant of the patent:
**17.09.2025 Bulletin 2025/38**

(21) Application number: **22778694.4**

(22) Date of filing: **23.03.2022**

(51) International Patent Classification (IPC):
*H04W 28/02* *(2009.01)*   *H04W 48/16* *(2009.01)*
*H04W 92/18* *(2009.01)*

(52) Cooperative Patent Classification (CPC):
**H04W 48/16; H04W 92/18; Y02D 30/70**

(86) International application number:
**PCT/CN2022/082505**

(87) International publication number:
**WO 2022/206511 (06.10.2022 Gazette 2022/40)**

(54) **MODE INDICATION METHOD, TERMINAL DEVICE, AND NETWORK DEVICE**

MODUSANZEIGEVERFAHREN, ENDGERÄTEVORRICHTUNG UND NETZWERKVORRICHTUNG

PROCÉDÉ D'INDICATION DE MODE, DISPOSITIF TERMINAL ET DISPOSITIF DE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2021 CN 202110356843**

(43) Date of publication of application:
**07.02.2024 Bulletin 2024/06**

(73) Proprietor: **Datang Mobile Communications Equipment Co., Ltd.**
**Beijing 100085 (CN)**

(72) Inventor: **REN, Xiaotao**
**Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
CN-A- 111 246 483     CN-A- 111 937 482
CN-A- 111 937 482     US-A1- 2020 187 252
US-A1- 2020 314 804   US-A1- 2023 345 550

- LG ELECTRONICS: "Discussion on resource allocation for power saving", vol. RAN WG1, no. e-Meeting; 20210125 - 20210205, 19 January 2021 (2021-01-19), XP051971026, Retrieved from the Internet <URL:https://ftp.3gpp.org/tsg_ran/WG1_RL1/TSGR1_104-e/Docs/R1-2100517.zip R1-2100517 Discussion on resource allocation for power saving.docx> [retrieved on 20210119]
- LG ELECTRONICS: "Discussion on resource allocation for power saving", 3GPP DRAFT; R1-2100517, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210125 - 20210205, 19 January 2021 (2021-01-19), Mobile Competence Centre ; 650, route des Lucioles ; F-06921 Sophia-Antipolis Cedex ; France , XP051971026

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The present disclosure relates to the technical field of communications, and in particular, to a method and an apparatus for calculating a channel busy ratio, and a terminal.

## BACKGROUND

In a 5G (5th Generation Mobile Communication Technology) system, direct communication is performed between a terminal and a terminal on a sidelink. Before performing service data transmission, a time-frequency resource used for sidelink data transmission needs to be determined, and a main criterion for determining the time-frequency resource is to avoid collision between time-frequency resources used by different terminals, so as to avoid mutual interference. Currently, there are two resource scheduling modes, a first type of the resource scheduling modes is a Mode 1 resource allocation mode in which a base station uniformly schedules time-frequency resources used in sidelink communication between a terminal and another terminal, a second type of the resource scheduling modes is a Mode 2 resource allocation mode in which when no base station participates, a terminal autonomously selects the time-frequency resources used in sidelink communication between the terminal and another terminal.

The Mode 2 adopts distributed resource scheduling, and since there is no base station for unified scheduling, the terminal needs to determine a resource occupation situation of other terminals by means of a resource sensing mechanism, and performs resource selection according to a result of the resource sensing. Compared with a completely random resource selection mechanism, a resource utilization rate can be improved through the resource sensing mechanism, a collision probability is reduced, and system performance is improved.

In the related art, in the Mode 2 resource allocation mode, the terminal performs resource exclusion according to its result of the resource sensing by the terminal, that is, collision resources sensed by the terminal is excluded, so that the problem of colliding with resources of other terminals when the terminal selects a sending resource is avoided. Resource sensing performed by the terminal generally adopts a manner of sensing all, that is, the terminal senses the resources all the time, and monitors an occupancy situation that other terminals occupy sub-channels in all resource pools of the terminal. However, in order to save power consumption of the terminal, the terminal may also use a manner of sensing partially, to perform the resource sensing in some time periods selected by the terminal, and no resource sensing is performed in other unselected time periods, thereby achieving the purpose of saving energy.

Currently, although partial sensing is defined for saving energy of a terminal, there is no discussion of whether a channel busy ratio (CBR) needs to be measured in the situation of partial sensing, and there is no relevant conclusion. However, in the situation of partial sensing, measuring the channel busy ratio can facilitate a terminal to select a wireless transmission parameter according to the channel busy ratio. In the related art, the channel busy ratio is not defined for the situation of partial sensing, and how to calculate the channel busy ratio is not specified, so that the terminal performing the partial sensing cannot select an appropriate sidelink wireless transmission parameter according to the channel busy ratio.

U.S. patent publication No. 2020/187252A1 discloses a method for performing sidelink communication by a first device (100) and a device for supporting the same.

3GPP meeting documents No. R1-2100517 with a title of "Discussion on resource allocation for power saving" discloses partial sensing based resource selection.

Chinese patent publication No. CN111937482A discloses a method and an apparatus for sidelink control and a user equipment.

## SUMMARY

An objective of the embodiments of the present disclosure is to provide a method and an apparatus of calculating a channel busy ratio, and a terminal, so as to solve the problem in the related art that the channel busy ratio cannot be calculated by a terminal performing partial sensing. The present invention is defined in the accompanying claims.

The above technical solution of the present disclosure has at least the following beneficial effects: according to the method and the apparatus of calculating the channel busy rate, and the terminal in the embodiments of the present disclosure, the terminal calculates the busy ratio of sub-channels in a sidelink resource pool according to at least one of a measurement result of partial sensing or periodic sensing, a measurement result of configured continuous sensing, a measurement result of re-evaluation or short-term sensing, so as to ensure sidelink communication. The calculation method can enable the terminal which cannot perform sensing in all occasions but can only perform sensing in partial occasions or in periodic occasions to also effectively calculate the channel busy ratio, and determine the appropriate parameters of the sidelink data transmission according to the channel busy ratio, thereby reducing the probability of data packet transmission failure caused by an improper parameter of sidelink data transmission, and improving the success rate of the sidelink data packet transmission.

## BRIEF DESCRIPTION OF THE DRAWINGS

FIG. 1 is a schematic diagram of a method of calculating a channel busy ratio according to some embodiments of the present disclosure;

FIG. 2 is a schematic diagram of a first example of the method of calculating a channel busy ratio according to some embodiments of the present disclosure;

FIG. 3 is another schematic diagram of the first example of the method of calculating a channel busy ratio according to some embodiments of the present disclosure;

FIG. 4 is a schematic diagram of a second example of the method of calculating a channel busy ratio according to some embodiments of the present disclosure;

FIG. 5 is another schematic diagram of the second example of the method of calculating a channel busy ratio according to some embodiments of the present disclosure;

FIG. 6 is a schematic diagram of a third example of the method of calculating a channel busy ratio according to some embodiments of the present disclosure;

FIG. 7 is a schematic diagram of a fourth example of the method of calculating a channel busy ratio according to some embodiments of the present disclosure;

FIG. 8 is a schematic diagram of a fifth example of the method of calculating a channel busy ratio according to some embodiments of the present disclosure;

FIG. 9 is a schematic structural diagram of a terminal according to some embodiments of the present disclosure;

FIG. 10 is a schematic structural diagram of an apparatus of calculating a channel busy ratio according to some embodiments of the present disclosure.

## DETAILED DESCRIPTION

In order to make the technical problems to be solved by the present disclosure, technical solutions and advantages of the present disclosure clearer, the following describes the technical solutions in detail with reference to the accompanying drawings and specific embodiments.

In the embodiments of the present disclosure, the term "and/or" describes an association relationship of associated objects, and indicates that there may be three relationships, for example, A and/or B may indicate that A exists alone, A and B exist at the same time, and B exists alone. A character "/" generally indicates that the associated objects have a "or" relationship.

In the embodiments of the present disclosure, the term "a plurality of" means two or more, and the other quantifiers are similar to the term.

The technical solutions in the embodiments of the present disclosure will be clearly and completely described below with reference to the accompanying drawings in the embodiments of the present disclosure. Obviously, the described embodiments are merely some, rather than all, of embodiments of the present disclosure. All other embodiments obtained by a person of ordinary skill in the art based on the embodiments of the present disclosure without creative efforts shall fall within the protection scope of the present disclosure.

The technical solutions provided in the embodiments of the present disclosure may be applied to various systems, especially 5G systems. For example, an applicable system may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability of microwave access (WiMAX) System, a 5G New Radio (NR) System, etc. Each of the systems includes a terminal device and a network device. The systems may further include a core network portion, such as an evolved packet system (EPS), a 5G system (5GS), etc.

The terminal according to the embodiments of the present disclosure may be a device for providing voice and/or data connectivity to a user, a handheld device having a wireless connection function, or other processing devices connected to a wireless modem, etc. In different systems, the name of the terminal may also be different, for example, the terminal in a 5G system may be referred to as a user equipment (UE). A wireless terminal device may communicate with one or more core networks (CN) via a radio access network (RAN). The wireless terminal device may be a mobile terminal device, such as a mobile phone (or referred to as a "cellular" phone) and a computer with a mobile terminal device, for example, may be a portable device, a pocket device, a handheld device, a computer built-in device or a vehicle-mounted mobile device that exchanges language and/or data with the radio access network. For example, devices such as a Personal Communication Service (PCS) phone, a cordless telephone, a Session Initiation Protocol (SIP) phone, a Wireless Local Loop (WLL) station, a Personal Digital Assistant (PDA), etc. The wireless terminal device may also be referred to as a system, a subscriber unit, a subscriber station, a mobile station, a mobile terminal, a remote station, an access point, a remote terminal, an access terminal, a user terminal, a user agent, and a user device, which are not limited in the embodiments of the present disclosure.

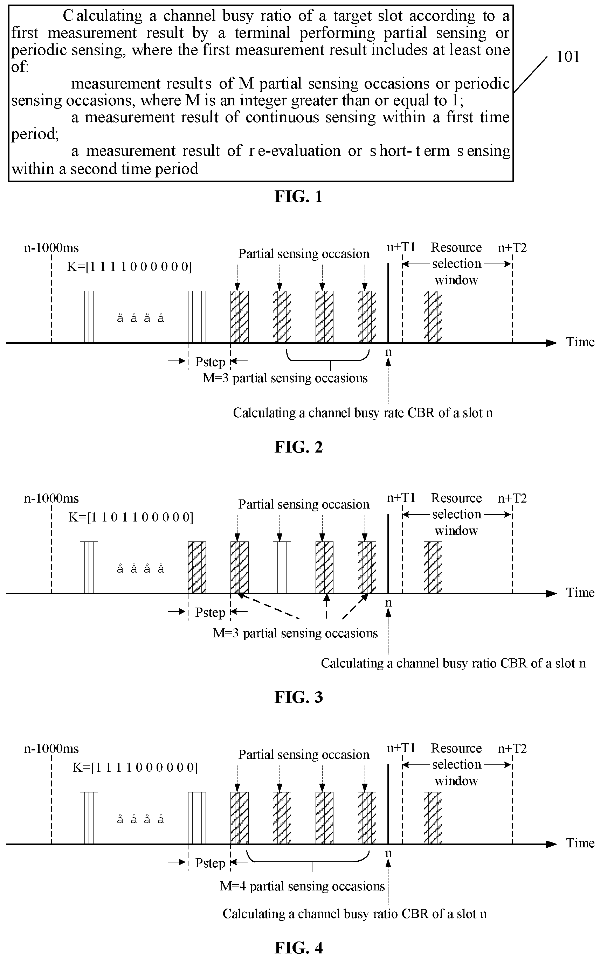

As shown in FIG. 1, an embodiment of the present disclosure provides a method of calculating a channel busy ratio, the method includes:

Step 101: calculating a channel busy ratio (CBR) of a target slot according to a first measurement result by a terminal performing partial sensing or periodic sensing, where the first measurement result includes at least one of the following:

a measurement result of M partial sensing occasions or periodic sensing occasions, where M is an integer greater than or equal to 1;

a measurement result of continuous sensing within a first time period;

a measurement result of Re-evaluation or Short-Term Sensing within a second time period.

It should be noted that in the foregoing embodiment of the present disclosure, the partial sensing includes at least one of the following:

periodic partial sensing;
continuous partial sensing.

In an optional embodiment, a time length of the first time period is K1×100 ms or L1×100 slots, where K1 and L1 are positive integers greater than or equal to 1.

Optionally, the time length of the second time period is K2×100 ms or L2×100 slots, where K2 and L2 are positive integers greater than or equal to 1.

In at least one embodiment of the present disclosure, after the terminal obtains the channel busy ratio through calculating, the method further includes: determining a parameter of sidelink data transmission according to the channel busy ratio by the terminal, where the parameter of sidelink data transmission includes at least one of the following:

a maximum transmit power of sidelink data transmission;

a range of retransmission times of each transmission block of sidelink data transmission;

a quantity range of sub-channels of a physical sidelink shared channel (PSSCH);

a range of Modulation and Coding Schemes (MCS) of sidelink data.

Further, the terminal performs transmission of a sidelink data packet according to the determined parameter of sidelink data transmission, thereby reducing a failure probability of data packet transmission caused by improper parameter of sidelink data transmission, and improving a success rate of transmission of the sidelink data packet.

In an optional embodiment, the M partial sensing occasions or the periodic sensing occasions include:

M partial sensing occasions or periodic sensing occasions before the target slot, wherein a value of M is configured or pre-configured; for example, the value of M is configured or pre-configured (such as factory default configuration) by a network or other terminals; wherein, one or more bits, corresponding to the M partial sensing occasions or the periodic sensing occasions, in a gapCandidateSensing parameter may be 0, or 1. Preferably, the one or more bits corresponding to the M partial sensing occasions or the periodic sensing occasions in the gapCandidateSensing parameter are configured to be 1; or,

a partial sensing occasion or a periodic sensing occasion corresponding to a bit configured as 1 in the gapCandidateSensing parameter corresponding to the partial sensing occasions or the periodic sensing occasions or in another parameter used to configuring the partial sensing occasions or the periodic sensing occasions; in other words, the value of M is the number of bits configured to be 1 in the gapCandidateSensing parameter; that is, the M partial sensing occasions or the M periodic sensing occasions are partial sensing occasions and periodic sensing occasions corresponding to all bits configured to be 1 in the high-layer parameter (gapCandidateSensing); in addition, the gapCandidateSensing parameters may have other names, that is, other parameters are used to configure a partial sensing occasion or a periodic sensing occasion; or,

a partial sensing occasion or a periodic sensing occasion in a third time period (such as [n-T, n-1]) before the target slot, wherein the value of the third time period is configured or pre-configured; for example, the value of the third time period is configured or pre-configured (such as factory default configuration) by the network or other terminals; preferably, the M partial sensing occasions or the M periodic sensing occasions are all partial sensing occasions or all periodic sensing occasions within the third time period.

In an optional embodiment, the time length of the third time period is K3×100 ms or L3×100 slots, where K3 and L3 are positive integers greater than or equal to 1.

In at least one embodiment of the present disclosure, when the first measurement result includes measurement results of M partial sensing occasions or periodic sensing occasions, the step 101 of calculating the channel busy ratio of the target slot according to the measurement results of the M partial sensing occasions or periodic sensing occasions by the terminal performing the partial sensing or periodic sensing includes

determining a sidelink received signal strength indicator (SL-RSSI) of each sub-channel according to the measurement results of the M partial sensing occasions or periodic sensing occasions by the terminal;

determining that the channel busy ratio of the target slot is a ratio of the number of sub-channels of which SL-RSSIs exceed a first threshold, to the number of all sub-channels in the resource pool.

In other words, the channel busy ratio of a slot N refers to the ratio of the number of the sub-channels which are sensed and measured by the terminal in the M partial sensing occasions or periodic sensing occasions before the slot N and of which SL-RSSIs exceed preconfigured threshold, to the number of all sub-channels in the resource pool, where M is a natural number greater than or equal to 1.

In an optional embodiment, determining the sidelink received signal strength indicator SL-RSSI of each sub-channel according to the measurement results of the M partial sensing occasions or periodic sensing occasions by the terminal includes:

determining that the SL-RSSI of a sub-channel is an average value of measurement results of the M partial sensing occasions or periodic sensing occasions;
or,
determining that the SL-RSSI of a sub-channel is a maximum value of measurement results of the M partial sensing occasions or periodic sensing occasions;
wherein the measurement result of the partial sensing occasions or the periodic sensing occasion is: the SL-RSSI obtained through measurement by the terminal within the partial sensing occasions or periodic sensing occasion.

For example, the SL-RSSI of one sub-channel is an average value obtained through measurement by the terminal in M partial sensing occasions or periodic sensing occasions, that is,

$$SL\_RSSI = \frac{\sum_{i=1}^{M} SL\_RSSI_i}{M}$$

where M is the total number of the partial sensing occasions or periodic sensing occasions for which measurement is made by the terminal; $M \geq 1$; $SL\_RSSI_i$ is the SL-RSSI obtained through measurement within the i-th partial sensing occasion or periodic sensing occasion.

In another example, the SL-RSSI of one sub-channel is the maximum value obtained through measurement by the terminal in M partial sensing occasions or periodic sensing occasions, that is,

$$SL\_RSSI = \max_{1 \leq i \leq M} SL\_RSSI_i$$

where M is the total number of the partial sensing occasions or periodic sensing occasions for which measurement is made by the terminal; $M \geq 1$; $SL\_RSSI_i$ is the SL-RSSI obtained through measurement within the i-th partial sensing occasion or periodic sensing occasion.

In at least one embodiment of the present disclosure, in a case that the first measurement result includes the measurement result of the continuous sensing in the first time period, the step 101 of calculating the channel busy ratio of the target slot according to the measurement result of the continuous sensing in the first time period, by the terminal includes:

determining a SL-RSSI of each sub-channel according to the measurement results of the continuous sensing within the first time period by the terminal;
determining that the channel busy ratio of the target slot is a ratio of the number of sub-channels of which SL-RSSIs exceed the first threshold, to the number of all sub-channels in the resource pool.

Optionally, the continuous sensing is continuous partial sensing, or the continuous sensing is periodic continuous sensing, that is, the terminal periodically performs measurement of a channel busy ratio in a configured measurement window of the continuous sensing; or the continuous sensing is aperiodic continuous sensing, that is, the measurement window of the continuous sensing is triggered by data packet transmission requirement, which is not specifically limited herein.

For example, a measurement window [n-T1, n-1] for continuous sensing is configured for a terminal performing partial sensing or periodic sensing and is used for measurement of the channel busy ratio. The channel busy ratio of the slot n refers to the ratio of the number of sub-channels which are continuously sensed in the measurement window [n-T1, n-1] and of which SL RSSIs obtained by the terminal through measurement exceed the (pre-configured) threshold, to the number of all sub-channels in the resource pool. The value of T1 is configured in a manner of signaling notification, or a value of T1 is preconfigured. Optionally, when the value of T1 is pre-configured, T1 is 100 ms or 100 slots.

In at least one embodiment of the present disclosure, in a case that the first measurement result includes a measurement result of Re-Evaluation or Short-Term Sensing in a second time period, the step 101 of calculating the channel busy ratio of the target slot according to the measurement result of the re-evaluation or short-term sensing in the second time period by the terminal includes:

determining the SL-RSSI of each sub-channel in the second time period by the terminal according to the measurement result of the re-evaluation or short-term sensing in the second time period ([n+ Tx, n+Ty]) after the target slot (for example, the target slot is n);
determining by the terminal that the channel busy ratio of the target slot is the ratio of the number of sub-channels of which SL-RSSIs exceed the first threshold, to the number of all sub-channels in the resource pool.

In other words, the channel busy ratio of the slot n is the ratio of the number of sub-channels of which SL RSSIs obtained through measurement by the terminal exceed the (preconfigured) threshold after the terminal performs re-evaluation or short-term sensing in the time period [n + Tx, n + Ty], to the number of all sub-channels in the resource pool.

It should be noted that methods of calculating the SL-RSSI obtained through continuous sensing measurement, the SL-RSSI of the re-evaluation, and the SL-RSSI of the short-term sensing mentioned in the embodiments of the present disclosure are consistent with the current methods of measuring and calculating the SL-RSSI of the continuous sensing, and the detailed description is not given in the present disclosure.

In order to more clearly describe the method of calculating the channel busy ratio of the terminal which performs partial sensing or periodic sensing in the embodiments of the present disclosure, the following describes the method in conjunction with several examples.

Example 1: a measurement result of M partial sensing occasions or periodic sensing occasions configured or pre-configured.

According to a measurement result of partial sensing or periodic sensing, the terminal calculates a channel busy ratio, and then determines a parameter of sidelink data transmission according to the channel busy ratio, so that the terminal performs sidelink communication.

The channel busy ratio of the slot n is the ratio of the number of sub-channels which are sensed by the terminal and of which SL-RSSIs obtained through measurement by the terminal exceed the (preconfigured) threshold in the M partial sensing occasions or periodic sensing occasions before the slot n, to the number of all sub-channels in the resource pool, where M is a natural number greater than or equal to 1.

Optionally, bits corresponding to the M partial sensing occasions or periodic sensing occasions in the high-layer configuration parameter gapCandidateSensing of the partial sensing occasion or periodic sensing occasion are configured as 1.

A formula of calculating the channel busy ratio $CBR_n$ in the slot n by the terminal is shown as follows:

$$CBR_n = \frac{N_{SC\_RSSI}}{N_{SC\_Total}} \times 100\%$$

where $N_{SC\_RSSI}$ represents the number of sub-channels, in the resource pool, of which SL RSSIs exceed the (preconfigured) threshold; $N_{SC\_Total}$ represents the total number of sub-channels in the resource pool.

Specifically, in order to calculate the channel busy ratio of the slot n, the terminal senses the M partial sensing occasions or periodic sensing occasions before the slot n. In the sensing process, the terminal measures the SL RSSIs of all the sub-channels in the resource pool configured by the terminal, and the ratio of the number of the sub-channels of which the SL RSSIs exceed the (preconfigured) threshold to the number of all sub-channels in the resource pool is the channel busy ratio of the terminal in the slot n.

As shown in FIG. 2 and FIG. 3, in order to calculate the channel busy ratio of the slot n, the terminal senses M = 3 partial sensing occasions before the slot n (the three partial sensing occasions in FIG. 2 are continuous, while the three partial sensing occasions in FIG. 3 are discontinuous), and measures the SL RSSIs of all sub-channels in the three partial sensing occasions, and then determines whether the SL RSSIs of the sub-channels exceed the pre-configured or configured threshold, and the ratio of the number of the sub-channels of which the SL RSSIs exceed the threshold to the total number of all sub-channels in the resource pool is the channel busy ratio of the terminal in the slot n.

It should be noted that the partial sensing occasions or periodic sensing occasions within the resource sensing window [n -1000 ms, n] are determined by the k-th bit of the high-layer parameter gap Candidate Sensing. As shown in FIG. 2, K = [1111000000], so continuous M = 3 partial sensing occasions corresponding to k = 1 are enabled, and resource sensing can be performed. As shown in FIG. 3, k = [1101100000], so the enabled M = 3 partial sensing occasions corresponding to k = 1 are discontinuous, so that M = 3 partial sensing occasions corresponding to k = 1 need to be selected for resource sensing.

In this example, the value of M needs to be pre-configured to the terminal, and the terminal calculates the channel busy ratio according to the M partial sensing occasions or periodic sensing occasions, so that the terminal which cannot perform sensing in all occasions but can only perform sensing in partial occasions or in periodic occasions can also effectively calculate the channel busy ratio, and determine the appropriate parameters of the sidelink data transmission according to the channel busy ratio, thereby reducing the probability of data packet transmission failure caused by an improper parameter of sidelink data transmission, and improving the success rate of the sidelink data packet transmission.

Example 2: a measurement result of partial sensing occasions or periodic sensing occasions corresponding to bits, configured as 1, of the gapCandidateSensing within the sensing window.

According to the measurement result of partial sensing or periodic sensing, the terminal calculates the channel busy ratio, and then determines a parameter of sidelink data transmission according to the channel busy ratio, so that the terminal performs sidelink communication.

The channel busy ratio of the slot n is the ratio of the number of sub-channels that are sensed by the terminal and of which SL-RSSIs obtained through measurement by the terminal in the M partial sensing occasions or periodic sensing occasions before the slot n exceed the (preconfigured) threshold, to the number of all sub-channels of the resource pool, where M is a natural number greater than or equal to 1.

The M partial sensing occasions or periodic sensing occasions are determined by a high-layer configuration parameter gapCandidateSensing of the partial sensing occasion or the periodic sensing occasion, that is, the M partial sensing occasions or periodic sensing occasions are partial sensing occasions and periodic sensing occasions corresponding to all bits configured to be 1 in the high-layer parameter.

The formula of calculating the channel busy ratio $CBR_n$ in the slot n by the terminal is shown as follows:

$$CBR_n = \frac{N_{SC\_RSSI}}{N_{SC\_Total}} \times 100\%$$

where $N_{SC\_RSSI}$ represents the number of sub-channels, in the resource pool, of which SL RSSIs exceed the (pre-configured) threshold; $N_{SC\_Total}$ represents the total number of sub-channels in the resource pool.

Specifically, in order to calculate the channel busy ratio of the slot n, the terminal senses the M partial sensing occasions or periodic sensing occasions before the slot n. In the sensing process, the terminal measures the SL RSSIs of all the sub-channels in the resource pool configured by the terminal, and the ratio of the number of the sub-channels, of which the SL RSSIs exceed the (pre-configured) threshold, to the number of all sub-channels in the resource pool is the channel busy ratio in the slot n of the terminal.

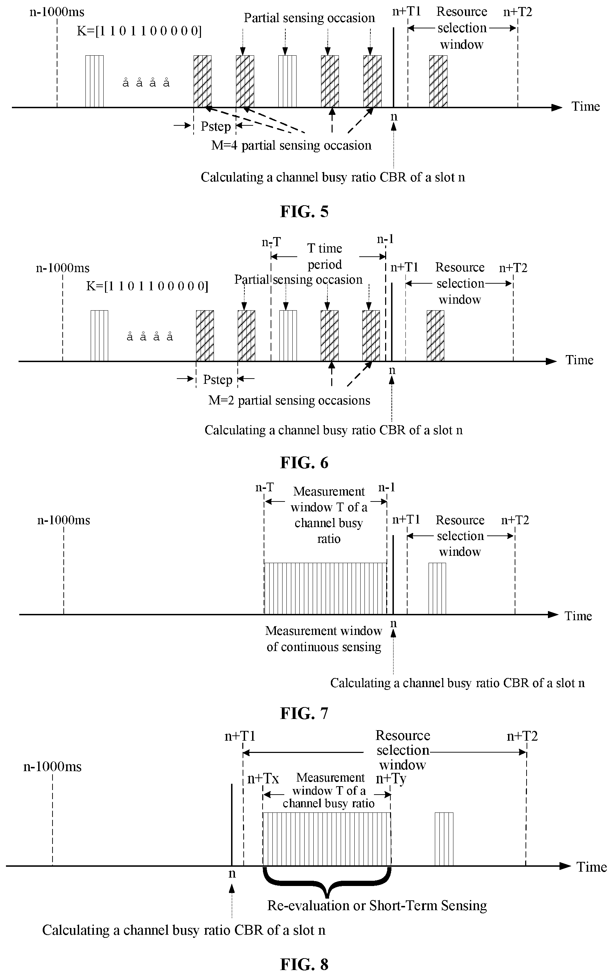

As shown in FIG. 4 and FIG. 5, in order to calculate the channel busy ratio of the slot n, the terminal senses M = 4 partial sensing occasions before the slot n, and measures the SL RSSIs of all sub-channels in the four partial sensing occasions, and then determines whether the SL RSSIs of the sub-channels exceed the pre-configured or configured threshold, and the ratio of the number of the sub-channels of which the SL RSSIs exceed the threshold, to the total number of all sub-channels in the resource pool is the channel busy ratio of the terminal in the slot n.

It should be noted that the partial sensing occasions or periodic sensing occasions within the resource sensing window [n -1000 ms, n] are determined by the k-th bit of the high-layer parameter gapCandidateSensing. As shown in FIG. 4, K = [1111000000], so continuous K = 4 partial sensing occasions corresponding to all k = 1 are enabled, and resource sensing can be performed. As shown in FIG. 5, k = [1101100000], so all the enabled K = 4 partial sensing occasions corresponding to k = 1 are discontinuous, all K = 4 partial sensing occasions corresponding to k = 1 need to be selected for resource sensing.

In this example, the M partial sensing occasion are determined according to the high-layer parameter gapCandidateSensing, and the terminal calculates the channel busy ratio according to the M partial sensing occasions or periodic sensing occasions, so that the terminal which cannot perform sensing in all occasions but can only perform sensing in partial occasions or in periodic occasions can also effectively calculate the channel busy ratio, and determine the appropriate parameters of the sidelink data transmission according to the channel busy ratio, thereby reducing the probability of data packet transmission failure caused by an improper parameter of sidelink data transmission, and improving the success rate of the sidelink data packet transmission.

Example 3: measurement results within all Partial Sensing Occasions within a T Period

According to a measurement result of partial sensing or periodic sensing, the terminal calculates the channel busy ratio, and then determines a parameter of sidelink data transmission according to the channel busy ratio, and the terminal performs sidelink communication.

The channel busy ratio of the slot n is the ratio of the number of sub-channels which are sensed by the terminal in all partial sensing occasions or periodic sensing occasions in the time period [n-T, n-1] and of which SL-RSSIs obtained through measurement by the terminal exceed the (preconfigured) threshold, to the number of all sub-channels in the resource pool. Optionally, the bits, corresponding to the partial sensing occasions or the periodic sensing occasions, in the high-layer configuration parameter gapCandidateSensing of the partial sensing or periodic sensing are configured to be 1.

A value of T is configured in a signaling notification manner, or the value of T is preconfigured. When the value of T is preconfigured, T is K×100 ms or L×100 slots, where K and L are positive integers greater than or equal to 1.

A formula of calculating the channel busy ratio $CBR_n$ in the slot n by the terminal is shown as follows:

$$CBR_n = \frac{N_{SC\_RSSI}}{N_{SC\_Total}} \times 100\%$$

\where $N_{SC\_RSSI}$ represents the number of sub-channels, in the resource pool, of which SL RSSIs exceed the (pre-configured) threshold; $N_{SC\_Total}$ represents the total number of sub-channels in the resource pool.

Specifically, in order to calculate the channel busy ratio of the slot n, the terminal senses all partial sensing occasions or periodic sensing occasions in a time period [n-T, n-1]. In the sensing process, the terminal measures the SL RSSIs of all the sub-channels in the resource pool configured by the terminal, and the ratio of the number of the sub-channels of which the SL RSSIs exceed the (pre-configured) threshold to the number of all sub-channels in the resource pool is the channel busy ratio of the terminal in the slot n. The partial sensing occasions or the periodic sensing occasions are determined by the high-layer configuration parameter gap-CandidateSensing of the partial sensing occasions or the periodic sensing occasions, that is, the M partial sensing occasions or periodic sensing occasions are partial sensing occasions and periodic sensing occasions corresponding to all bits configured to be 1 in the high-layer parameter.

As shown in FIG. 6, in order to calculate the channel busy ratio of the slot n, the terminal senses partial sensing occasions within the time period [n-T, n-1], and measures the SL RSSIs of all sub-channels in the M=2 partial sensing occasions, and then determines whether the SL RSSIs of the sub-channels exceed the pre-configured or configured threshold, and the ratio of the number of the sub-channels of which the SL RSSIs exceed the threshold to the total number of all sub-channels in the resource pool is the channel busy ratio of the terminal in the slot n.

It should be noted that the partial sensing occasions or periodic sensing occasions within the resource sensing window [n -T, n-1] are determined by the k-th bit of the high-layer parameter gap Candidate Sensing. As shown in FIG. 6, K = [1101100000], so there are two partial sensing occasions or periodic sensing occasions [n-T, n-1], and M = 2 partial sensing occasions corresponding to k = 1 need to be selected for resource sensing.

In this example, the value of T needs to be preconfigured to the terminal, and the terminal calculates the channel busy ratio according to all partial sensing occasions or periodic sensing occasions in the [n-T, n-1] time period, so that the terminal which cannot perform sensing in all occasions but can only perform sensing in partial occasions or in periodic occasions can also effectively calculate the channel busy ratio, and determine the appropriate parameters of the sidelink data transmission according to the channel busy ratio, thereby reducing the probability of data packet transmission failure caused by an improper parameter of sidelink data transmission, and improving the success rate of the sidelink data packet transmission.

Example 4: a measurement window of continuous sensing is configured for a terminal performing partial sensing.

According to configured measurement information of the measurement window of continuous sensing, the terminal calculates the channel busy ratio, and then determines the parameter of the sidelink data transmission according to the channel busy ratio, so that the terminal performs sidelink communication.

The measurement window [n-T, n-1] of the continuous sensing is configured for a terminal performing partial sensing or periodic sensing and is used for measuring the channel busy ratio.

The channel busy ratio of the slot n is the ratio of the number of sub-channels that are sensed by the terminal within the measurement window [n-T, n-1] and of which SL-RSSIs obtained through measurement by the terminal exceed the (preconfigured) threshold, to the number of all sub-channels of the resource pool.

As shown in FIG. 7, for the aperiodic continuous sensing measurement, it is assumed that the terminal can predict a data arrival time instant n in advance, then the terminal may preconfigure a measurement window of continuous sensing before the time instant n, and then the terminal measures the channel busy ratio according to the measurement window of continuous sensing shown in FIG. 7.

In this example, it is necessary to configure a measurement window of periodic continuous sensing, in this case, the power consumption of the terminal will be increased; or it is necessary configure a measurement window of aperiodic continuous sensing, in this case, although the increase of the power consumption is less significant, the terminal needs to know the data arrival time instant n in advance, the method of calculating the channel busy ratio according to the configured measurement window of continuous sensing can enable the terminal, which cannot perform sensing in all occasions but can only perform sensing in partial occasions or in periodic occasions, to also effectively calculate the channel busy ratio, and determine the appropriate parameters of the sidelink data transmission according to the channel busy ratio, thereby reducing the probability of data packet transmission failure caused by an improper parameter of sidelink data transmission, and improving the success rate of the sidelink data packet transmission.

Example 5: using a measurement result of re-evaluation or short-term sensing

According to the measurement information of the re-evaluation or the short-term sensing, the terminal calculates the channel busy ratio, and then determines the parameter of the sidelink data transmission according to the channel busy ratio, so that the terminal performs sidelink communication.

The channel busy ratio of the slot n is the ratio of the number of sub-channels that are re-evaluated or short-term-sensed by the terminal in the time period [n+Tx, n+Ty] and of which SL-RSSIs obtained through measurement by the terminal exceed the (preconfigured) threshold, to the number of all sub-channels of the resource pool.

As shown in FIG. 8, calculating the channel busy ratio of the slot n needs to use re-evaluated or short-term-sensed measurement information after the slot n to perform measurement of the SL RSSIs.

In this example, information the channel busy ratio of the slot n needs to use measurement information re-evaluated or short-term-sensed after the slot n, which may cause lag of calculating the channel busy ratio, and may cause the delay of resource selection and may be affected by the time length of the re-evaluation or the short-term sensing. However, by using the method of calculating the channel busy ratio according to the re-evaluated or the short-term sensed measurement information, the terminal which cannot perform sensing in all occasions but can only perform sensing in partial occasions or in periodic occasions can also effectively calculate the channel busy ratio, and determine the appropriate parameters of the sidelink data transmission according to the channel busy ratio, thereby reducing the probability of data packet transmission failure caused by an improper parameter of sidelink data transmission, and improving the success rate of the sidelink data packet transmission.

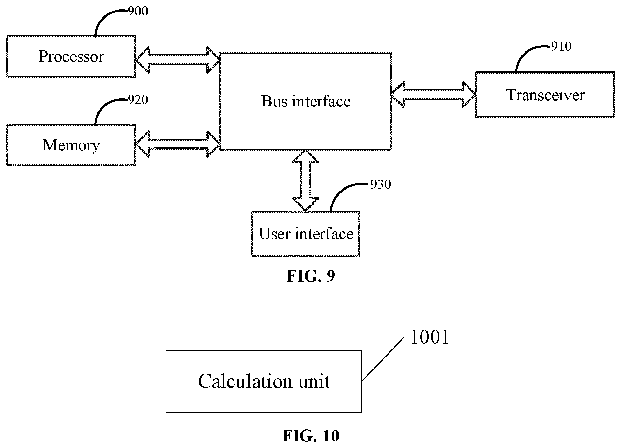

As shown in FIG. 9, an embodiment of the present disclosure further provides a terminal, where the terminal is a terminal performing partial sensing or periodic sensing, and the terminal includes a memory 920, a transceiver 910, and a processor 900.

The memory 920 is configured to store a computer program; The transceiver 910 is configured to send and receive data under the control of the processor 900; and The processor 900 is configured to read the computer program in the memory 920 and perform the following operations:

calculating a channel busy ratio (CBR) of a target slot according to a first measurement result, where the first measurement result includes at least one of the following:

　　a measurement result of M partial sensing occasions or periodic sensing occasions, where M is an integer greater than or equal to 1;
　　a measurement result of continuous sensing within a first time period;
　　a measurement result of Re-evaluation or Short-Term Sensing within a second time period.

In an optional embodiment, the partial sensing includes at least one of the following:

　　periodic partial sensing;
　　continuous partial sensing.

In an optional embodiment, the processor 900 is further configured to read the computer program in the memory and perform the following operations:
determining a parameter of sidelink data transmission according to the channel busy ratio, where the parameter of sidelink data transmission includes at least one of the following:

　　a maximum transmit power of sidelink data transmission;
　　a range of retransmission times of each transmission block of sidelink data transmission;
　　a quantity range of sub-channels of a physical sidelink shared channel (PSSCH);
a range of Modulation and Coding Schemes (MCS) of sidelink data.

In an optional embodiment, the M partial sensing occasions or periodic sensing occasions include:

　　M partial sensing occasions or periodic sensing occasions before the target slot, wherein a value of M is configured or pre-configured; or,
　　a partial sensing occasion or a periodic sensing occasion corresponding to a bit configured as 1 in the gapCandidateSensing parameter corresponding to the partial sensing occasion or the periodic sensing occasion or in another parameter used to configure the partial sensing occasion or the periodic sensing occasion; or,
　　a partial sensing occasion or a periodic sensing occasion in a third time period before the target slot, wherein the value of the third time period is configured or pre-configured.

In an optional embodiment, a time length of the first time period is $K1 \times 100$ ms or $L1 \times 100$ slots, where $K1$ and $L1$ are positive integers greater than or equal to 1; or, the time length of the second time period is $K2 \times 100$ ms or $L2 \times 100$ slots, where $K2$ and $L2$ are positive integers greater than or equal to 1; or, the time length of the third time period is $K3 \times 100$ ms or $L3 \times 100$ slots, where $K3$ and $L3$ are positive integers greater than or equal to 1.

In an optional embodiment, the processor 900 is further configured to read thecomputer program in the memory and perform the following operations:

　　determining a sidelink received signal strength indicator (SL-RSSI) of each sub-channel according to the measurement results of the M partial sensing occasions or periodic sensing occasions;
　　determining that the channel busy ratio of the target slot is a ratio of the number of sub-channels of which SL-RSSIs exceed a first threshold, to the number of all sub-channels in the resource pool.

In an optional embodiment, the processor 900 is further configured to read the computer program in the memory and perform the following operations:

　　determining that the SL-RSSI of a sub-channel is an average value of measurement results of the M partial sensing occasions or periodic sensing occasions;
　　or,
　　determining that the SL-RSSI of a sub-channel is a maximum value of measurement results of the M partial sensing occasions or periodic sensing occasions;
　　wherein the measurement result of the partial sensing occasion or the periodic sensing occasion is: the SL-RSSI obtained through measurement by the terminal within the partial sensing occasions or periodic sensing occasion.

In an optional embodiment, the processor is further configured to read the computer program in the memory and perform the following operations:

determining a SL-RSSI of each sub-channel according to the measurement results of the continuous sensing within the first time period;

determining that the channel busy ratio of the target slot is a ratio of the number of sub-channels of which SL-RSSIs exceed the first threshold, to the number of all sub-channels in the resource pool.

In an alternative embodiment, the continuous sensing is continuous partial sensing, or periodic continuous sensing, or aperiodic continuous sensing.

In an optional embodiment, the processor 900 is further configured to read the computer program in the memory and perform the following operations:

determining the SL-RSSI of each sub-channel in the second time period according to the measurement result of the re-evaluation or short-term sensing in the second time period after the target slot;

determining that the channel busy ratio of the target slot is the ratio of the number of sub-channels of which SL-RSSIs exceed the first threshold, to the number of all sub-channels in the resource pool.

In FIG. 9, a bus architecture may include any number of interconnected buses and bridges, specifically various circuit such as one or more processors represented by the processor 900 and a memory represented by the memory 920 are linked together. The bus architecture may also link together various other circuits, such as peripheral devices, voltage regulators, and power management circuits, etc. which are well known in the art, and therefore are not further described herein. The bus interface provides an interface. The transceiver 910 may be a plurality of elements, i.e. include a transmitter and a receiver, and provide units for communicating with various other devices on transmission media, the transmission media including transmission media such as a wireless channel, a wired channel, and an optical cable. For different user equipment, the user interface 930 may also be an interface that can be externally or internally connected to a required device, and the connected device includes, but is not limited to, a keypad, a display, a speaker, a microphone, a joystick, etc.

The processor 900 is responsible for managing the bus architecture and general processing, and the memory 920 may store data used by the processor 900 when performing operations.

Optionally, the processor 900 may be a CPU (Central Processing Unit), an ASIC (Application Specific Integrated Circuit), an FPGA (Field-Programmable Gate Array) or a CPLD (Complex Programmable Logic Device), and the processor may also adopt a multi-core architecture.

The processor is configured to, by invoking the computer program stored in the memory, perform any of the methods provided in the embodiments of the present disclosure according to obtained executable instructions. The processor and the memory may also be physically separately arranged.

In this embodiment of the present disclosure, the terminal calculates the busy ratio of sub-channels in a sidelink resource pool according to at least one of a measurement result of partial sensing or periodic sensing, a measurement result of configured continuous sensing, a measurement result of re-evaluation or short-term sensing, so as to ensure sidelink communication. The calculation method can enable the terminal which cannot perform sensing in all occasions but can only perform sensing in partial occasions or in periodic occasions to also effectively calculate the channel busy ratio, and determine the appropriate parameters of the sidelink data transmission according to the channel busy ratio, thereby reducing the probability of data packet transmission failure caused by an improper parameter of sidelink data transmission, and improving the success rate of the sidelink data packet transmission.

The method and the terminal are based on the same inventive concept, and since the principles of solving the problem of the method and the terminal are similar, the implementation of the terminal and the method may be obtained by referring to each other, and detailed description are not repeated here.

As shown in FIG. 10, an embodiment of the present disclosure further provides an apparatus of calculating a channel busy ratio, which is applied to a terminal that performs partial sensing or periodic sending. The apparatus includes:

a calculation unit 1001 configured to calculate a channel busy ratio (CBR) of a target slot according to a first measurement result, where the first measurement result includes at least one of the following:

a measurement result of M partial sensing occasions or periodic sensing occasions, where M is an integer greater than or equal to 1;

a measurement result of continuous sensing within a first time period;

a measurement result of Re-evaluation or Short-Term Sensing within a second time period.

In an optional embodiment, the partial sensing includes at least one of the following:

periodic partial sensing;

continuous partial sensing.

In an optional embodiment, the apparatus further includes:
a parameter determining unit, configured to determine a parameter of sidelink data transmission according to the channel busy ratio, where the parameter of sidelink data transmission includes at least one of the following:

a maximum transmit power of sidelink data transmission;
a range of retransmission times of each transmission block of sidelink data transmission;
a quantity range of sub-channels of a physical sidelink shared channel (PSSCH);
a range of Modulation and Coding Schemes (MCS) of sidelink data.

In an optional embodiment, the M partial sensing occasions or periodic sensing occasions include:

M partial sensing occasions or periodic sensing occasions before the target slot, wherein a value of M is configured or pre-configured; or,
a partial sensing occasion or a periodic sensing occasion corresponding to a bit configured as 1 in the gapCandidateSensing parameter corresponding to the partial sensing occasion or the periodic sensing occasion or in another parameter used to configure the partial sensing occasion or the periodic sensing occasion; or,
a partial sensing occasion or a periodic sensing occasion in a third time period before the target slot, wherein the value of the third time period is configured or pre-configured.

In an optional embodiment, a time length of the first time period is K1×100 ms or L1×100 slots, where K1 and L1 are positive integers greater than or equal to 1; or, the time length of the second time period is K2×100 ms or L2×100 slots, where K2 and L2 are positive integers greater than or equal to 1; or, the time length of the third time period is K3×100 ms or L3×100 slots, where K3 and L3 are positive integers greater than or equal to 1.
In an optional embodiment, the computing unit includes:

a first sub-unit configured to determine a sidelink received signal strength indicator (SL-RSSI) of each sub-channel according to the measurement results of the M partial sensing occasions or periodic sensing occasions;
a second sub-unit configured to determine that the channel busy ratio of the target slot is a ratio of the number of sub-channels of which SL-RSSIs exceed a first threshold, to the number of all sub-channels in the resource pool.

In an optional embodiment, the first sub-unit is further configured to:

determine that the SL-RSSI of a sub-channel is an average value of measurement results of the M partial sensing occasions or periodic sensing occasions;
or,
determine that the SL-RSSI of a sub-channel is a maximum value of measurement results of the M partial sensing occasions or periodic sensing occasions;

wherein the measurement result of the partial sensing occasion or the periodic sensing occasion is: the SL-RSSI obtained through measurement by the terminal within the partial sensing occasions or periodic sensing occasion
In an optional embodiment, the computing unit includes:

a third sub-unit, configured to determine a SL-RSSI of each sub-channel according to the measurement results of the continuous sensing within the first time period;
a fourth sub-unit, configured to determine that the channel busy ratio of the target slot is a ratio of the number of sub-channels of which SL-RSSIs exceed the first threshold, to the number of all sub-channels in the resource pool.

In an optional embodiment, the continuous sensing is continuous partial sensing, or periodic continuous sensing, or aperiodic continuous sensing.
In an optional embodiment, the computing unit includes:

a fifth sub-unit, configured to determine the SL-RSSI of each sub-channel in the second time period according to the measurement result of the re-evaluation or short-term sensing in the second time period after the target slot;
a sixth sub-unit, configured to determine that the channel busy ratio of the target slot is the ratio of the number of sub-channels of which SL-RSSIs exceed the first threshold, to the number of all sub-channels in the resource pool.

In this embodiment of the present disclosure, the terminal calculates the busy ratio of sub-channels in a sidelink resource pool according to at least one of a measurement result of partial sensing or periodic sensing, a measurement result of configured continuous sensing, a measurement result of re-evaluation or short-term sensing, so as to ensure sidelink communication. The calculation method can enable the terminal which cannot perform sensing in all occasions but can only perform sensing in partial occasions or in periodic occasions to also effectively calculate the channel busy ratio, and determine the appropriate parameters of the sidelink data transmission according to the channel busy ratio, thereby reducing the probability of data packet transmission failure caused by an improper parameter of sidelink data transmission, and improving the success rate of the sidelink data packet transmission.

The method and the apparatus are based on the same inventive concept, and since the principles of solving the problem of the method and the apparatus are similar, the implementation of the apparatus and the method may be obtained by referring to each other, and detailed description are not repeated here.

It should be noted that, the division of the units in the embodiments of the present disclosure is schematic, but is merely a logical function division, and there may be another division manner in actual implementation. In addition, functional units in the embodiments of the present disclosure may be integrated into one processing unit, or each of the units may exist alone physically, or two or more units may be integrated into one unit. The integrated unit may be implemented in the form of hardware, or may be implemented in the form of a software functional unit.

When the integrated unit is implemented in the form of the software functional unit and sold or used as an independent product, the integrated unit may be stored in a processor-readable storage medium. Based on such understanding, an essential part or all, or part contributing to the related art, of the technical solutions of the present disclosure may be embodied in the form of a computer software product, and the computer software product is stored in a storage medium, and includes several instructions for enabling a computer device (which may be a personal computer, a server, or a network device, etc.) or a processor to perform all or part of the steps of the method according to various embodiments of the present disclosure. The foregoing storage medium includes various media that can store program codes, such as a USB flash disk, a mobile hard disk, a read-only memory (ROM), a random access memory (RAM), a magnetic disk, or an optical disk.

Embodiments of the present disclosure further provide a processor-readable storage medium, where the processor-readable storage medium stores a computer program, and the computer program is configured to cause the processor to execute the method as described above. The processor-readable storage medium may be any usable medium or data storage device accessible by the processor, including, but not limited to, a magnetic memory (for example, a floppy disk, a hard disk, a magnetic tape, a magneto-optical disk (MO), etc.), an optical memory (such as CD, DVD, BD, HVD, etc.), and a semiconductor memory (for example, a ROM, an EPROM, an EEPROM, a non-volatile memory (NAND Flash), a solid state disk (SSD)), etc.

Those skilled in the art should understand that the embodiments of the present disclosure may be provided as a method, a system, or a computer program product. Thus, the present disclosure may take the form of a hardware embodiment, a software embodiment, or embodiments incorporating software and hardware aspects. Moreover, the present disclosure may take the form of a computer program product implemented on one or more computer-usable storage media (including but not limited to a disk memory and an optical memory, etc.) including computer-usable program codes.

The present disclosure is described with reference to flowcharts and/or block diagrams of methods, apparatus (systems), and computer program products according to embodiments of the present disclosure. It should be understood that each flow and/or block in the flowcharts and/or block diagrams, and combinations of flows and/or blocks in the flowcharts and/or block diagrams, can be implemented by computer-executable instructions. These computer-executable instructions may be provided to a processor of a general purpose computer, a special purpose computer, an embedded processor, or other programmable data processing device to generate a machine, such that instructions executed by a processor of the computer or other programmable data processing device generate means for implementing functions specified in one or more flows of the flowchart and/or one or more blocks of the block diagram.

These processor-executable instructions may also be stored in a processor-readable memory that can direct a computer or other programmable data processing device to operate in a particular manner such that the instructions stored in the processor-readable memory produce a product that includes an instruction device that implements the functions specified in one or more flows of the flowchart and/or one or more blocks of the block diagram.

These processor-executable instructions may also be loaded onto a computer or other programmable data processing device such that a series of operational steps are performed on a computer or other programmable device to produce a computer-implemented process, such that the instructions executed on the computer or other programmable device provide steps for implementing the functions specified in one or more flows of the flowcharts and/or one or more blocks of the block diagrams.

It should be noted that, it should be understood that the division of the above modules is merely a division of a logical function, and all or some of the modules may be integrated onto one physical entity during actual implementation, or may be physically separated. In addition, these modules may all be implemented in the form of software invoked by a processing element, or may all be implemented in the form of hardware; or some modules may be implemented in the form of a processing element invoking software, and some of the modules are implemented in the form of hardware. For example, the determining module may be a separately configured processing element, or may be integrated in a certain chip of the foregoing apparatus, and in addition, the determining module may also be stored in a memory of the apparatus in the form of program codes, and a certain processing element of the apparatus invokes and executes the functions of the determining module. Implementations of other modules are similar. In addition, all or part of these modules may be integrated together, or may be implemented independently. The processing element described herein may be an integrated circuit having a signal processing capability. In an implementation process, each step of the above-mentioned method or each of the above modules may be completed by means of an integrated logic circuit of hardware in the processor element or an instruction in a software form.

For example, each module, unit, sub-unit, or sub-module may be one or more integrated circuits configured to implement the above method, for example, one or more application specific integrated circuits (ASICs), or one or more digital signal processor (DSPs), or one or more field programmable gate arrays (FPGAs), etc. For another example, when a certain module is implemented in the form of a processing element scheduling program codes, the processing element may be a general-purpose processor, for example, a central processing unit (CPU) or another processor that may invoke a program code. As another example, these modules may be integrated together and implemented in the form of a system-on-a-chip (SOC).

The terms "first," "second, "and the like in the specification and claims of the present disclosure are used to distinguish similar objects, and do not need to be used to describe a specific order or sequence. It should be understood that the terms used in this way may be interchanged under appropriate circumstances so that the embodiments of the disclosure described herein, for example, are implemented in an order other than those illustrated or described herein. Furthermore, the terms" include "and" have " and any variations thereof are intended to cover non-exclusive inclusion, for example, processes, methods, systems, products, or devices that include a series of steps or units are not necessarily limited to those steps or units clearly listed, but may include other steps or units not expressly listed or inherent to these processes, methods, products, or devices. **In** addition, the description and the claims use "and/or" indicate at least one of the connected objects, such as A and/or B and/or C, indicating that there are seven cases, i.e., A exists alone, B exists alone, C exists alone, and both A and B exist, both B and C exist, both A and C exist, and all A, B and C exist. Similarly, the use of "at least one of A and B" in this specification and in the claims should be understood as "a single A, a single B, or both A and B".

The processor is configured to, by invoking the computer program stored in the memory, perform any of the methods provided in the embodiments of the present disclosure according to obtained executable instructions. The processor and the memory may also be physically separately arranged.

In this embodiment of the present disclosure, the terminal calculates the busy ratio of sub-channels in a sidelink resource pool according to at least one of a measurement result of partial sensing or periodic sensing, a measurement result of configured continuous sensing, a measurement result of re-evaluation or short-term sensing, so as to ensure sidelink communication. The calculation method can enable the terminal which cannot perform sensing in all occasions but can only perform sensing in partial occasions or in periodic occasions to also effectively calculate the channel busy ratio, and determine the appropriate parameters of the sidelink data transmission according to the channel busy ratio, thereby reducing the probability of data packet transmission failure caused by an improper parameter of sidelink data transmission, and improving the success rate of the sidelink data packet transmission.

The method and the terminal are based on the same inventive concept, and since the principles of solving the problem of the method and the terminal are similar, the implementation of the terminal and the method may be obtained by referring to each other, and detailed description are not repeated here.

As shown in FIG. 10, an embodiment of the present disclosure further provides an apparatus of calculating a channel busy ratio, which is applied to a terminal that performs partial sensing or periodic sending. The apparatus includes:

a calculation unit 1001 configured to calculate a channel busy ratio (CBR) of a target slot according to a first measurement result, where the first measurement result includes at least one of the following:

> a measurement result of M partial sensing occasions or periodic sensing occasions, where M is an integer greater than or equal to 1;
> a measurement result of continuous sensing within a first time period;
> a measurement result of Re-evaluation or Short-Term Sensing within a second time period.

In an optional embodiment, the partial sensing includes at least one of the following:

> periodic partial sensing;
> continuous partial sensing.

In an optional embodiment, the apparatus further includes:

a parameter determining unit, configured to determine a parameter of sidelink data transmission according to the channel busy ratio, where the parameter of sidelink data transmission includes at least one of the following:

> a maximum transmit power of sidelink data transmission;
> a range of retransmission times of each transmission block of sidelink data transmission;
> a quantity range of sub-channels of a physical sidelink shared channel (PSSCH);

a range of Modulation and Coding Schemes (MCS) of sidelink data.

In an optional embodiment, the M partial sensing occasions or periodic sensing occasions include:

M partial sensing occasions or periodic sensing occasions before the target slot, wherein a value of M is configured or pre-configured; or,
a partial sensing occasion or a periodic sensing occasion corresponding to a bit configured as 1 in the gapCandidateSensing parameter corresponding to the partial sensing occasion or the periodic sensing occasion or in another parameter used to configure the partial sensing occasion or the periodic sensing occasion; or,
a partial sensing occasion or a periodic sensing occasion in a third time period before the target slot, wherein the value of the third time period is configured or pre-configured.

In an optional embodiment, a time length of the first time period is $K1 \times 100$ ms or $L1 \times 100$ slots, where K1 and L1 are positive integers greater than or equal to 1; or, the time length of the second time period is $K2 \times 100$ ms or $L2 \times 100$ slots, where K2 and L2 are positive integers greater than or equal to 1; or, the time length of the third time period is $K3 \times 100$ ms or $L3 \times 100$ slots, where K3 and L3 are positive integers greater than or equal to 1.

In an optional embodiment, the computing unit includes:

a first sub-unit configured to determine a sidelink received signal strength indicator (SL-RSSI) of each sub-channel according to the measurement results of the M partial sensing occasions or periodic sensing occasions;
a second sub-unit configured to determine that the channel busy ratio of the target slot is a ratio of the number of sub-channels of which SL-RSSIs exceed a first threshold, to the number of all sub-channels in the resource pool.

In an optional embodiment, the first sub-unit is further configured to:

determine that the SL-RSSI of a sub-channel is an average value of measurement results of the M partial sensing occasions or periodic sensing occasions;
or,
determine that the SL-RSSI of a sub-channel is a maximum value of measurement results of the M partial sensing occasions or periodic sensing occasions;

wherein the measurement result of the partial sensing occasion or the periodic sensing occasion is: the SL-RSSI obtained through measurement by the terminal within the partial sensing occasions or periodic sensing occasion

In an optional embodiment, the computing unit includes:

a third sub-unit, configured to determine a SL-RSSI of each sub-channel according to the measurement results of the continuous sensing within the first time period;
a fourth sub-unit, configured to determine that the channel busy ratio of the target slot is a ratio of the number of sub-channels of which SL-RSSIs exceed the first threshold, to the number of all sub-channels in the resource pool.

In an optional embodiment, the continuous sensing is continuous partial sensing, or periodic continuous sensing, or aperiodic continuous sensing.

In an optional embodiment, the computing unit includes:

a fifth sub-unit, configured to determine the SL-RSSI of each sub-channel in the second time period according to the measurement result of the re-evaluation or short-term sensing in the second time period after the target slot;
a sixth sub-unit, configured to determine that the channel busy ratio of the target slot is the ratio of the number of sub-channels of which SL-RSSIs exceed the first threshold, to the number of all sub-channels in the resource pool.

In this embodiment of the present disclosure, the terminal calculates the busy ratio of sub-channels in a sidelink resource pool according to at least one of a measurement result of partial sensing or periodic sensing, a measurement result of configured continuous sensing, a measurement result of re-evaluation or short-term sensing, so as to ensure sidelink communication. The calculation method can enable the terminal which cannot perform sensing in all occasions but can only perform sensing in partial occasions or in periodic occasions to also effectively calculate the channel busy ratio, and determine the appropriate parameters of the sidelink data transmission according to the channel busy ratio, thereby reducing the probability of data packet transmission failure caused by an improper parameter of sidelink data transmission, and improving the success rate of the sidelink data packet transmission.

The method and the apparatus are based on the same inventive concept, and since the principles of solving the problem of the method and the apparatus are similar, the implementation of the apparatus and the method may be obtained by referring to each other, and detailed description are not repeated here.

It should be noted that, the division of the units in the embodiments of the present disclosure is schematic, but is merely a logical function division, and there may be another division manner in actual implementation. In addition, functional units in the embodiments of the present disclosure may be integrated into one processing unit, or each of the units may exist alone physically, or two or more units may be integrated into one unit. The integrated unit may be implemented in the form of hardware, or may be implemented in the form of a software functional unit.

When the integrated unit is implemented in the form of the software functional unit and sold or used as an independent product, the integrated unit may be stored in a processor-readable storage medium. Based on such understanding, an essential part or all, or part contributing to the related art, of the technical solutions of the present disclosure may be embodied in the form of a computer software product, and the computer software product is stored in a storage medium, and includes several instructions for enabling a computer device (which may be a personal computer, a server, or a network device, etc.) or a processor to perform all or part of the steps of the method according to various embodiments of the present disclosure. The foregoing storage medium includes various media that can store program codes, such as a USB flash disk, a mobile hard disk, a read-only memory (ROM), a random access memory (RAM), a magnetic disk, or an optical disk.

Embodiments of the present disclosure further provide a processor-readable storage medium, where the processor-readable storage medium stores a computer program, and the computer program is configured to cause the processor to execute the method as described above. The processor-readable storage medium may be any usable medium or data storage device accessible by the processor, including, but not limited to, a magnetic memory (for example, a floppy disk, a hard disk, a magnetic tape, a magneto-optical disk (MO), etc.), an optical memory (such as CD, DVD, BD, HVD, etc.), and a semiconductor memory (for example, a ROM, an EPROM, an EEPROM, a non-volatile memory (NAND Flash), a solid state disk (SSD)), etc.

Those skilled in the art should understand that the embodiments of the present disclosure may be provided as a method, a system, or a computer program product. Thus, the present disclosure may take the form of a hardware embodiment, a software embodiment, or embodiments incorporating software and hardware aspects. Moreover, the present disclosure may take the form of a computer program product implemented on one or more computer-usable storage media (including but not limited to a disk memory and an optical memory, etc.) including computer-usable program codes.

The present disclosure is described with reference to flowcharts and/or block diagrams of methods, apparatus (systems), and computer program products according to embodiments of the present disclosure. It should be understood that each flow and/or block in the flowcharts and/or block diagrams, and combinations of flows and/or blocks in the flowcharts and/or block diagrams, can be implemented by computer-executable instructions. These computer-executable instructions may be provided to a processor of a general purpose computer, a special purpose computer, an embedded processor, or other programmable data processing device to generate a machine, such that instructions executed by a processor of the computer or other programmable data processing device generate means for implementing functions specified in one or more flows of the flowchart and/or one or more blocks of the block diagram.

These processor-executable instructions may also be stored in a processor-readable memory that can direct a computer or other programmable data processing device to operate in a particular manner such that the instructions stored in the processor-readable memory produce a product that includes an instruction device that implements the functions specified in one or more flows of the flowchart and/or one or more blocks of the block diagram.

These processor-executable instructions may also be loaded onto a computer or other programmable data processing device such that a series of operational steps are performed on a computer or other programmable device to produce a computer-implemented process, such that the instructions executed on the computer or other programmable device provide steps for implementing the functions specified in one or more flows of the flowcharts and/or one or more blocks of the block diagrams.

It should be noted that, it should be understood that the division of the above modules is merely a division of a logical function, and all or some of the modules may be integrated onto one physical entity during actual implementation, or may be physically separated. In addition, these modules may all be implemented in the form of software invoked by a processing element, or may all be implemented in the form of hardware; or some modules may be implemented in the form of a processing element invoking software, and some of the modules are implemented in the form of hardware. For example, the determining module may be a separately configured processing element, or may be integrated in a certain chip of the foregoing apparatus, and in addition, the determining module may also be stored in a memory of the apparatus in the form of program codes, and a certain processing element of the apparatus invokes and executes the functions of the determining module. Implementations of other modules are similar. In addition, all or part of these modules may be integrated together, or may be implemented independently. The processing element described herein may be an integrated circuit having a signal processing capability. In an implementation process, each step of the above-mentioned method or each of the above modules may be completed by means of an integrated logic circuit of hardware in the processor element or an instruction in a software form.

For example, each module, unit, sub-unit, or sub-module may be one or more integrated circuits configured to implement the above method, for example, one or more application specific integrated circuits (ASICs), or one or more digital signal processor (DSPs), or one or more field programmable gate arrays (FPGAs), etc. For another example, when a certain module is implemented in the form of a processing element scheduling program codes, the processing element may be a general-purpose processor, for example, a central processing unit (CPU) or another processor that may invoke a program code. As another example, these modules may be integrated together and implemented in the form of a system-on-a-chip (SOC).

The terms "first," "second, "and the like in the specification and claims of the present disclosure are used to distinguish similar objects, and do not need to be used to describe a specific order or sequence. It should be understood that the terms used in this way may be interchanged under appropriate circumstances so that the embodiments of the disclosure described herein, for example, are implemented in an order other than those illustrated or described herein. Furthermore, the terms" include "and" have " and any variations thereof are intended to cover non-exclusive inclusion, for example, processes, methods, systems, products, or devices that include a series of steps or units are not necessarily limited to those steps or units clearly listed, but may include other steps or units not expressly listed or inherent to these processes, methods, products, or devices. In addition, the description and the claims use "and/or" indicate at least one of the connected objects, such as A and/or B and/or C, indicating that there are seven cases, i.e., A exists alone, B exists alone, C exists alone, and both A and B exist, both B and C exist, both A and C exist, and all A, B and C exist. Similarly, the use of "at least one of A and B" in this specification and in the claims should be understood as "a single A, a single B, or both A and B".

Obviously, those skilled in the art may make various modifications and variations to the present disclosure without departing from the spirit and scope of the present disclosure. Thus, if these modifications and variations of the present disclosure fall within the scope of the claims and their equivalents, the present disclosure is also intended to encompass these modifications and variations.

**Claims**

1. A method of calculating a channel busy ratio, the method being performed by a terminal **characterized in that**, the method comprises:

   calculating (101) a channel busy ratio of a target slot according to a first measurement result by the terminal performing partial sensing, wherein the first measurement result comprises measurement results of M partial sensing occasions, wherein M is an integer greater than or equal to 1;
   wherein the M partial sensing occasions comprise: a partial sensing occasion corresponding to a bit configured as 1 in a gapCandidateSensing parameter corresponding to the partial sensing occasion or in another parameter used to configure the partial sensing occasion.

2. The method according to claim 1, wherein the partial sensing comprises at least one of: periodic partial sensing and continuous partial sensing.

3. The method according to claim 1, further comprising: determining one or more parameters of sidelink data transmission according to the channel busy ratio, wherein the one or more parameters of sidelink data transmission comprise one or more of following:

   a maximum transmit power of sidelink data transmission;
   a range of retransmission times of each transmission block of sidelink data transmission;
   a quantity range of sub-channels of a physical sidelink shared channel PSSCH;
   a range of Modulation and Coding Schemes MCSs of sidelink data.

4. The method according to claim 1, wherein a time length of the first time period is $K1 \times 100$ ms or $L1 \times 100$ slots, wherein K1 and L1 are positive integers greater than or equal to 1; or,
   a time length of the second time period is $K2 \times 100$ ms or $L2 \times 100$ slots, wherein K2 and L2 are positive integers greater than or equal to 1.

5. The method according to claim 1, wherein a time length of the third time period is $K3 \times 100$ ms or $L3 \times 100$ slots, wherein K3 and L3 are positive integers greater than or equal to 1.

6. The method according to claim 1, wherein in case that the first measurement result comprises the measurement results of the M partial sensing occasions, calculating the channel busy ratio of the target slot according to the first measurement result by the terminal performing partial sensing comprises:

   determining a sidelink received signal strength indicator SL-RSSI of each sub-channel according to the measurement results of the M partial sensing occasions s;
   determining that the channel busy ratio of the target slot is a ratio of a quantity of sub-channels of which SL-RSSIs exceed a first threshold to a quantity of all sub-channels in a resource pool.

**7.** The method according to claim 6, wherein determining the sidelink received signal strength indicator SL-RSSI of each sub-channel according to the measurement results of the M partial sensing occasions comprises:

determining that the SL-RSSI of the sub-channel is an average value of the measurement results of the M partial sensing occasions; or,
determining that the SL-RSSI of the sub-channel is a maximum value of the measurement results of the M partial sensing occasions;
wherein a measurement result of a partial sensing occasion is: a SL-RSSI obtained through measurement by the terminal within the partial sensing occasion.

**8.** The method according to claim 1, wherein in case that the first measurement result comprises the measurement result of continuous sensing within the first time period, calculating the channel busy ratio of the target slot according to the first measurement result by the terminal comprises:

determining a sidelink received signal strength indicator SL-RSSI of each sub-channel within the first time period according to the measurement result of the continuous sensing within the first time period by the terminal;
determining by the terminal that the channel busy ratio of the target slot is a ratio of a quantity of sub-channels of which SL-RSSIs exceed a first threshold, to a quantity of all sub-channels in a resource pool.

**9.** The method according to claim 1, wherein the continuous sensing is continuous partial sensing, or periodic continuous sensing, or aperiodic continuous sensing.

**10.** The method according to claim 1, wherein in case that the first measurement result comprises the measurement result of re-evaluation or short-term sensing within the second time period, calculating the channel busy ratio of the target slot according to the first measurement result by the terminal comprises:

determining the SL-RSSI of each sub-channel in the second time period according to the measurement result of the re-evaluation or short-term sensing in the second time period after the target slot;
determining that the channel busy ratio of the target slot is a ratio of a quantity of sub-channels of which SL-RSSIs exceed a first threshold, to a quantity of all sub-channels in a resource pool.

**11.** An apparatus for a terminal performing partial sensing, the apparatus being configured to calculate a channel busy ration and
**characterized in that**, the apparatus comprises:

a calculation unit (1001), configured to calculate a channel busy ratio of a target slot according to a first measurement result, wherein the first measurement result comprises measurement results of M partial sensing occasions, wherein M is an integer greater than or equal to 1;
wherein the M partial sensing occasions comprise a partial sensing occasion corresponding to a bit configured as 1 in a gapCandidateSensing parameter corresponding to the partial sensing occasion or in another parameter used to configure the partial sensing occasion.

**12.** The apparatus according to claim 11, further comprising:
a parameter determining unit, configured to determine one or more parameters of sidelink data transmission according to the channel busy ratio, wherein the one or more parameters of sidelink data transmission comprise one or more of following:

a maximum transmit power of sidelink data transmission;
a range of retransmission times of each transmission block of sidelink data transmission;
a quantity range of sub-channels of a physical sidelink shared channel PSSCH;
a range of Modulation and Coding Schemes MCSs of sidelink data.

**13.** The apparatus according to claim 11, wherein the calculation unit (1001) comprises:

a first sub-unit, configured to determine a sidelink received signal strength indicator SL-RSSI of each sub-channel according to the measurement results of the M partial sensing occasions; and
a second sub-unit, configured to determine that the channel busy ratio of the target slot is a ratio of a quantity of sub-channels of which SL-RSSIs exceed a first threshold to a quantity of all sub-channels in a resource pool;
or
the calculation unit comprises:

a third sub-unit, configured to determine a sidelink received signal strength indicator SL-RSSI of each sub-channel according to the measurement result of the continuous sensing within the first time period; and
a fourth sub-unit, configured to determine that the channel busy ratio of the target slot is a ratio of a quantity of sub-channels of which SL-RSSIs exceed a first threshold, to a quantity of all sub-channels in a resource pool;

or

the calculation unit comprises:

a fifth sub-unit, configured to determine the SL-RSSI of each sub-channel in the second time period according to the measurement result of the re-evaluation or short-term sensing in the second time period after the target slot; and

a sixth sub-unit, configured to determine that the channel busy ratio of the target slot is a ratio of a quantity of sub-channels of which SL-RSSIs exceed a first threshold, to a quantity of all sub-channels in a resource pool.

14. A processor-readable storage medium for a terminal, wherein the processor-readable storage medium stores a computer program, and the computer program is configured to cause a processor of the terminal to execute a method of calculating a channel busy ratio, **characterized in that** the method comprises:

calculating a channel busy ratio of a target slot according to a first measurement result by a terminal performing partial sensing, wherein the first measurement result comprises: measurement results of M partial sensing occasions, wherein M is an integer greater than or equal to 1;

wherein the M partial sensing occasions comprise: a partial sensing occasion corresponding to a bit configured as 1 in a gapCandidateSensing parameter corresponding to the partial sensing occasion in another parameter used to configure the partial sensing occasion.

**Patentansprüche**

1. Verfahren zur Berechnung eines Kanalbelegungsverhältnisses, wobei das Verfahren von einem Endgerät durchgeführt wird, **dadurch gekennzeichnet, dass** das Verfahren umfasst:

Berechnen (101) eines Kanalbelegungsverhältnisses eines Ziel-Slots entsprechend einem ersten Messergebnis, indem das Endgerät eine Teilabtastung durchführt, wobei das erste Messergebnis Messergebnisse von M Teilabtastungsgelegenheiten umfasst, wobei M eine ganze Zahl größer als oder gleich 1 ist;

wobei die M Teilabtastungsgelegenheiten umfassen: eine Teilabtastungsgelegenheit, die einem Bit entspricht, das als 1 konfiguriert ist in einem gapCandidateSensing-Parameter, welcher der Teilabtastungsgelegenheit entspricht, oder in einem anderen Parameter, der zur Konfiguration der Teilabtastungsgelegenheit verwendet wird.

2. Verfahren nach Anspruch 1, wobei die Teilabtastung mindestens eines aus Folgendem umfasst: periodische Teilabtastung und kontinuierliche Teilabtastung.

3. Verfahren nach Anspruch 1, das ferner umfasst: Bestimmen eines Parameters oder mehrerer Parameter einer Sidelink-Datenübertragung entsprechend dem Kanalbelegungsverhältnis, wobei der eine Parameter oder die mehreren Parameter der Sidelink-Datenübertragung eines oder mehreres aus Folgendem umfassen:

eine maximale Sendeleistung einer Sidelink-Datenübertragung;
einen Bereich von Wiederübertragungszeiten jedes Übertragungsblocks einer Sidelink-Datenübertragung;
einen Mengenbereich von Subkanälen eines Physical Sidelink Shared Channel PSSCH;
einen Bereich von Modulation and Coding Schemes MCSs von Sidelink-Daten.

4. Verfahren nach Anspruch 1, wobei eine Zeitlänge des ersten Zeitraums K1 x 100 ms oder L1 x 100 Slots beträgt, wobei K1 und L1 positive ganze Zahlen größer als oder gleich 1 sind; oder
eine Zeitlänge des zweiten Zeitraums K2 x 100 ms oder L2 x 100 Slots beträgt, wobei K2 und L2 positive ganze Zahlen größer als oder gleich 1 sind.

5. Verfahren nach Anspruch 1, wobei eine Zeitlänge des dritten Zeitraums K3 x 100 ms oder L3 x 100 Slots beträgt, wobei K3 und L3 positive ganze Zahlen größer als oder gleich 1 sind.

6. Verfahren nach Anspruch 1, wobei, wenn das erste Messergebnis die Messergebnisse der M Teilabtastungsgelegenheiten umfasst, das Berechnen des Kanalbelegungsverhältnisses des Ziel-Slots entsprechend dem ersten Messergebnis, in dem das Endgerät eine Teilabtastung durchführt, umfasst:

Bestimmen eines Sidelink Received Signal Strength Indicator SL-RSSI jedes Subkanals entsprechend dem Messergebnis der M Teilabtastungsgelegenheiten;
Bestimmen, dass das Kanalbelegungsverhältnis des Ziel-Slots ein Verhältnis einer Menge von Subkanälen, deren SL-RSSIs einen ersten Schwellenwert überschreiten, zu einer Menge sämtlicher Subkanäle in einem Ressourcenpool ist.

7. Verfahren nach Anspruch 6, wobei das Bestimmen des Sidelink Received Signal Strength Indicator SL-RSSI jedes Subkanals entsprechend dem Messergebnis der M Teilabtastungsgelegenheiten umfasst:

Bestimmen, dass der SL-RSSI des Subkanals ein Durchschnittswert der Messergebnisse der M Teilabtastungsgelegenheiten ist; oder
Bestimmen, dass der SL-RSSI des Subkanals ein maximaler Wert der Messergebnisse der M Teilabtastungsgelegenheiten ist;
wobei ein Messergebnis einer Teilabtastungsgelegenheit ist: ein SL-RSSI, der durch Messung mittels des Endgeräts innerhalb der Teilabtastungsgelegenheit erhalten wird.

8. Verfahren nach Anspruch 1, wobei, wenn das erste Messergebnis das Messergebnis einer kontinuierlichen Abtastung innerhalb des ersten Zeitraums umfasst, das Berechnen des Kanalbelegungsverhältnisses des Ziel-Slot entsprechend dem ersten Messergebnis mittels des Endgeräts umfasst:

Bestimmen eines Sidelink Received Signal Strength Indicator SL-RSSI jedes Subkanals innerhalb des ersten Zeitraums entsprechend dem Messergebnis der kontinuierlichen Abtastung innerhalb des ersten Zeitraums mittels des Endgeräts;
Bestimmen, mittels des Endgeräts, dass das Kanalbelegungsverhältnis des Ziel-Slots ein Verhältnis einer Menge von Subkanälen, deren SL-RSSIs einen ersten Schwellenwert überschreiten, zu einer Menge sämtlicher Subkanäle in einem Ressourcenpool ist.

9. Verfahren nach Anspruch 1, wobei die kontinuierliche Abtastung eine kontinuierliche Teilabtastung, oder eine periodische kontinuierliche Abtastung, oder eine aperiodische kontinuierliche Abtastung ist.

10. Verfahren nach Anspruch 1, wobei, wenn das erst Messergebnis das Messergebnis von Neuevaluierung oder Kurzzeit-Abtastung innerhalb des zweiten Zeitraums umfasst, das Berechnen des Kanalbelegungsverhältnisses des Ziel-Slots entsprechend dem ersten Messergebnis mittels des Endgeräts umfasst:

Bestimmen des SL-RSSI jedes Subkanals in dem zweiten Zeitraum entsprechend dem Messergebnis der Neuevaluierung oder Kurzzeit-Abtastung in dem zweiten Zeitraum nach dem Ziel-Slot;
Bestimmen, dass das Kanalbelegungsverhältnis des Ziel-Slots ein Verhältnis einer Menge von Subkanälen, deren SL-RSSIs einen ersten Schwellenwert überschreiten, zu einer Menge sämtlicher Subkanäle in einem Ressourcenpool ist.

11. Vorrichtung für ein Endgerät, das eine Teilabtastung durchführt, wobei die Vorrichtung dazu ausgebildet ist, ein Kanalbelegungsverhältnis zu berechnen, und **dadurch gekennzeichnet, dass** die Vorrichtung aufweist:

eine Berechnungseinheit (1001), die dazu ausgebildet ist, ein Kanalbelegungsverhältnis eines Ziel-Slots entsprechend einem ersten Messergebnis zu berechnen, wobei das erste Messergebnis Messergebnisse von M Teilabtastungsgelegenheiten umfasst, wobei M eine ganze Zahl größer als oder gleich 1 ist;
wobei die M Teilabtastungsgelegenheiten umfassen: eine Teilabtastungsgelegenheit, die einem Bit entspricht, das als 1 konfiguriert ist in einem gapCandidateSensing-Parameter, welcher der Teilabtastungsgelegenheit entspricht, oder in einem anderen Parameter, der zur Konfiguration der Teilabtastungsgelegenheit verwendet wird.

12. Vorrichtung nach Anspruch 11, die ferner aufweist: eine Parameterbestimmungseinheit, die dazu ausgebildet ist, einen Parameter oder mehrere Parameter einer Sidelink-Datenübertragung entsprechend dem Kanalbelegungsverhältnis zu bestimmen, wobei der eine Parameter oder die mehreren Parameter der Sidelink-Datenübertragung eines oder mehreres aus Folgendem umfassen:

eine maximale Sendeleistung einer Sidelink-Datenübertragung;
einen Bereich von Wiederübertragungszeiten jedes Übertragungsblocks einer Sidelink-Datenübertragung;
einen Mengenbereich von Subkanälen eines Physical Sidelink Shared Channel PSSCH;
einen Bereich von Modulation and Coding Schemes MCSs von Sidelink-Daten.

13. Vorrichtung nach Anspruch 11, wobei die Berechnungseinheit (1001) aufweist:

eine erst Subeinheit, die dazu ausgebildet ist, einen Sidelink Received Signal Strength Indicator SL-RSSI jedes Subkanals entsprechend den Messergebnissen der M Teilabtastungsgelegenheiten zu bestimmen;
eine zweite Subeinheit, die dazu ausgebildet ist, zu bestimmen, dass das Kanalbelegungsverhältnis des Ziel-Slots ein Verhältnis einer Menge von Subkanälen, deren SL-RSSIs einen ersten Schwellenwert überschreiten, zu einer Menge sämtlicher Subkanäle in einem Ressourcenpool ist;
oder
die Berechnungseinheit aufweist:

eine dritte Subeinheit, die dazu ausgebildet ist, einen Sidelink Received Signal Strength Indicator SL-RSSI jedes Subkanals entsprechend dem Messergebnis der kontinuierlichen Abtastung innerhalb des ersten Zeitraums zu bestimmen; und
eine vierte Subeinheit, die dazu ausgebildet ist, zu bestimmen, dass das Kanalbelegungsverhältnis des Ziel-Slots ein Verhältnis einer Menge von Subkanälen, deren SL-RSSIs einen ersten Schwellenwert überschreiten, zu einer Menge sämtlicher Subkanäle in einem Ressourcenpool ist;
oder
die Berechnungseinheit aufweist:

eine fünfte Subeinheit, die dazu ausgebildet ist, den SL-RSSI jedes Subkanals in dem zweiten Zeitraum entsprechend dem Messergebnis der Neuevaluierung oder Kurzzeit-Abtastung in dem zweiten Zeitraum nach dem Ziel-Slot zu bestimmen; und
eine sechste Subeinheit, die dazu ausgebildet ist, zu bestimmen, dass das Kanalbelegungsverhältnis des Ziel-Slots ein Verhältnis einer Menge von Subkanälen, deren SL-RSSIs einen ersten Schwellenwert überschreiten, zu einer Menge sämtlicher Subkanäle in einem Ressourcenpool ist.

14. Speichermedium für ein Endgerät, das von einem Prozessor lesbar ist, wobei das von einem Prozessor lesbare Speichermedium ein Computerprogramm speichert, und wobei das Computerprogramm dazu ausgebildet ist, zu bewirken, dass ein Prozessor des Endgeräts ein Verfahren zur Berechnung eines Kanalbelegungsverhältnisses ausführt, **dadurch gekennzeichnet, dass** das Verfahren umfasst:

Berechnen eines Kanalbelegungsverhältnisses eines Ziel-Slots entsprechend einem ersten Messergebnis, indem ein Endgerät eine Teilabtastung durchführt, wobei das erste Messergebnis umfasst: Messergebnisse von M Teilabtastungsgelegenheiten, wobei M eine ganze Zahl größer als oder gleich 1 ist;

wobei die M Teilabtastungsgelegenheiten umfassen: eine Teilabtastungsgelegenheit, die einem Bit entspricht, das als 1 konfiguriert ist in einem gapCandidateSensing-Parameter, welcher der Teilabtastungsgelegenheit entspricht, oder in einem anderen Parameter, der zur Konfiguration der Teilabtastungsgelegenheit verwendet wird.

## Revendications

1. Procédé de calcul d'un taux d'occupation de canaux, le procédé étant mis en œuvre par un terminal, **caractérisé en ce que** le procédé comprend l'étape consistant à :

calculer (101) un taux d'occupation de canaux d'un créneau cible conformément à un premier résultat de mesure par le terminal mettant en œuvre une détection partielle, dans lequel le premier résultat de mesure comprend des résultats de mesure de M occasions de détection partielle, dans lequel M est un nombre entier supérieur ou égal à 1 ;
dans lequel les M occasions de détection partielle comprennent : une occasion de détection partielle correspondant à un bit configuré à 1 dans un paramètre gapCandidateSensing correspondant à l'occasion de détection partielle ou dans un autre paramètre utilisé pour configurer l'occasion de détection partielle.

2. Procédé selon la revendication 1, dans lequel la détection partielle comprend au moins une détection parmi : une détection partielle périodique et une détection partielle continue.

3. Procédé selon la revendication 1, comprenant en outre l'étape consistant à :
déterminer un ou plusieurs paramètres de transmission de données de liaison latérale conformément au taux d'occupation de canaux, dans lequel le ou les paramètres de transmission de données de liaison latérale comprennent une ou plusieurs des composantes suivantes :

une puissance de transmission maximale de transmission de données de liaison latérale ;
une plage de temps de retransmission de chaque bloc de transmission de transmission de données de liaison latérale ;
une plage de quantité de sous-canaux d'un canal physique de liaison latérale partagé, dit PSSCH ;
une plage de schémas de modulation et de codage, dit MCS, de données de liaison latérale.

**4.** Procédé selon la revendication 1, dans lequel une durée de la première période de temps est K1 x 100 ms ou L1 x 100 créneaux, dans lequel K1 et L1 sont des nombres entiers positifs supérieurs ou égaux à 1 ; ou,
une durée de la deuxième période de temps est K2 x 100 ms ou L2 x 100 créneaux, dans lequel K2 et L2 sont des nombres entiers positifs supérieurs ou égaux à 1.

**5.** Procédé selon la revendication 1, dans lequel une durée de la troisième période de temps est K3 x 100 ms ou L3 x 100 créneaux, dans lequel K3 et L3 sont des nombres entiers positifs supérieurs ou égaux à 1.

**6.** Procédé selon la revendication 1, dans lequel, dans un cas dans lequel le premier résultat de mesure comprend les résultats de mesure des M occasions de détection partielle, l'étape de calcul du taux d'occupation de canaux du créneau cible conformément au premier résultat de mesure par le terminal mettant en œuvre une détection partielle consiste à :

déterminer un indicateur d'intensité de signal reçu de liaison latérale, dit SL-RSSI, de chaque sous-canal conformément aux résultats de mesure des M occasions de détection partielle ;
déterminer que le taux d'occupation de canaux du créneau cible est un rapport d'une quantité de sous-canaux dont les SL-RSSI dépassent un premier seuil à une quantité de tous les sous-canaux d'un groupe de ressources.

**7.** Procédé selon la revendication 6, dans lequel la détermination de l'indicateur d'intensité de signal reçu de liaison latérale, dit SL-RSSI, de chaque sous-canal conformément aux résultats de mesure des M occasions de détection partielle consiste à :

déterminer que le SL-RSSI du sous-canal est une valeur moyenne des résultats de mesure des M occasions de détection partielle ;
ou,
déterminer que le SL-RSSI du sous-canal est une valeur maximale des résultats de mesure des M occasions de détection partielle ;
dans lequel un résultat de mesure d'une occasion de détection partielle est : un SL-RSSI obtenu par une mesure par le terminal à l'intérieur de l'occasion de détection partielle.

**8.** Procédé selon la revendication 1, dans lequel, dans un cas dans lequel le premier résultat de mesure comprend le résultat de mesure d'une détection continue sur la première période de temps, l'étape de calcul du taux d'occupation de canaux du créneau cible conformément au premier résultat de mesure par le terminal consiste à :

déterminer un indicateur d'intensité de signal reçu de liaison latérale, dit SL-RSSI, de chaque sous-canal sur la première période de temps conformément au résultat de mesure de la détection continue sur la première période de temps par le terminal ;
déterminer, par le terminal, que le taux d'occupation de canaux du créneau cible est un rapport d'une quantité de sous-canaux dont les SL-RSSI dépassent un premier seuil, à une quantité de tous les sous-canaux d'un groupe de ressources.

**9.** Procédé selon la revendication 1, dans lequel la détection continue est une détection partielle continue, ou une détection continue périodique, ou une détection continue apériodique.

**10.** Procédé selon la revendication 1, dans lequel, dans un cas dans lequel le premier résultat de mesure comprend le résultat de mesure de détection de réévaluation ou à court terme sur la deuxième période de temps, l'étape de calcul du taux d'occupation de canaux du créneau cible conformément au premier résultat de mesure par le terminal consiste à :

déterminer le SL-RSSI de chaque sous-canal sur la deuxième période de temps conformément au résultat de mesure de la détection de réévaluation ou à court terme sur la deuxième période de temps après le créneau cible ;
déterminer que le taux d'occupation de canaux du créneau cible est un rapport d'une quantité de sous-canaux dont les SL-RSSI dépassent un premier seuil, à une quantité de tous les sous-canaux d'un groupe de ressources.

**11.** Appareil destiné à un terminal mettant en œuvre une détection partielle, l'appareil étant configuré pour calculer un taux d'occupation de canaux et étant **caractérisé en ce que** l'appareil comprend :

une unité de calcul (1001), configurée pour calculer un taux d'occupation de canaux d'un créneau cible conformément à un premier résultat de mesure, dans lequel le premier résultat de mesure comprend des résultats de mesure de M occasions de détection partielle, dans lequel M est un nombre entier supérieur ou égal à 1 ;
dans lequel les M occasions de détection partielle comprennent une occasion de détection partielle correspondant à un bit configuré à 1 dans un paramètre gapCandidateSensing correspondant à l'occasion de détection partielle ou dans un autre paramètre utilisé pour configurer l'occasion de détection partielle.

12. Appareil selon la revendication 11, comprenant en outre :
une unité de détermination de paramètres, configurée pour déterminer un ou plusieurs paramètres de transmission de données de liaison latérale conformément au taux d'occupation de canaux, dans lequel le ou les paramètres de transmission de données de liaison latérale comprennent une ou plusieurs des composantes suivantes :

une puissance de transmission maximale de transmission de données de liaison latérale ;
une plage de temps de retransmission de chaque bloc de transmission de transmission de données de liaison latérale ;
une plage de quantité de sous-canaux d'un canal physique de liaison latérale partagé, dit PSSCH ;
une plage de schémas de modulation et de codage, dit MCS, de données de liaison latérale.

13. Appareil selon la revendication 11, dans lequel l'unité de calcul (1001) comprend :

une première sous-unité, configurée pour déterminer un indicateur d'intensité de signal reçu de liaison latérale, dit SL-RSSI, de chaque sous-canal conformément aux résultats de mesure des M occasions de détection partielle ; et
une deuxième sous-unité, configurée pour déterminer que le taux d'occupation de canaux du créneau cible est un rapport d'une quantité de sous-canaux dont les SL-RSSI dépassent un premier seuil à une quantité de tous les sous-canaux d'un groupe de ressources ;
ou
l'unité de calcul comprend :

une troisième sous-unité, configurée pour déterminer un indicateur d'intensité de signal reçu de liaison latérale, dit SL-RSSI, de chaque sous-canal conformément au résultat de mesure de la détection continue sur la première période de temps ; et
une quatrième sous-unité, configurée pour déterminer que le taux d'occupation de canaux du créneau cible est un rapport d'une quantité de sous-canaux dont les SL-RSSI dépassent un premier seuil, à une quantité de tous les sous-canaux d'un groupe de ressources ;
ou
l'unité de calcul comprend :

une cinquième sous-unité, configurée pour déterminer le SL-RSSI de chaque sous-canal sur la deuxième période de temps conformément au résultat de mesure de la détection de réévaluation ou à court terme sur la deuxième période de temps après le créneau cible ; et
une sixième sous-unité, configurée pour déterminer que le taux d'occupation de canaux du créneau cible est un rapport d'une quantité de sous-canaux dont les SL-RSSI dépassent un premier seuil, à une quantité de tous les sous-canaux d'un groupe de ressources.

14. Support d'informations lisible par processeur destiné à un terminal,
dans lequel le support d'informations lisible par processeur maintient un programme d'ordinateur, et le programme d'ordinateur est configuré pour amener un processeur du terminal à exécuter un procédé de calcul d'un taux d'occupation de canaux, **caractérisé en ce que** le procédé comprend l'étape consistant à :

calculer un taux d'occupation de canaux d'un créneau cible conformément à un premier résultat de mesure par un terminal mettant en œuvre une détection partielle, dans lequel le premier résultat de mesure comprend : des résultats de mesure de M occasions de détection partielle, dans lequel M est un nombre entier supérieur ou égal à 1 ;
dans lequel les M occasions de détection partielle comprennent : une occasion de détection partielle correspondant à un bit configuré à 1 dans un paramètre gapCandidateSensing correspondant à l'occasion de détection partielle ou dans un autre paramètre utilisé pour configurer l'occasion de détection partielle.

Calculating a channel busy ratio of a target slot according to a first measurement result by a terminal performing partial sensing or periodic sensing, where the first measurement result includes at least one of:

    measurement results of M partial sensing occasions or periodic sensing occasions, where M is an integer greater than or equal to 1;

    a measurement result of continuous sensing within a first time period;

    a measurement result of r e-evaluation or s hort-t erm s ensing within a second time period

101

**FIG. 1**

**FIG. 2**

**FIG. 3**

**FIG. 4**

Calculating a channel busy ratio CBR of a slot n

**FIG. 5**

Calculating a channel busy ratio CBR of a slot n

**FIG. 6**

Calculating a channel busy ratio CBR of a slot n

**FIG. 7**

Calculating a channel busy ratio CBR of a slot n

**FIG. 8**

900

Processor

Bus interface

910

Transceiver

920

Memory

930

User interface

**FIG. 9**

1001

Calculation unit

**FIG. 10**

**EP 4 319 274 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020187252 A1

- CN 111937482 A

**Non-patent literature cited in the description**

- Discussion on resource allocation for power saving. *3GPP meeting documents No. R1-2100517*